# EUROPEAN PATENT SPECIFICATION

(11) **EP 1 451 808 B1**
(45) Date of publication and mention of the grant of the patent: **24.01.2007**
(21) Application number: 02803891.7
(22) Date of filing: 26.11.2002
(51) Int. Cl.: G10L 15/28

(54) **METHOD OF OPERATING A BARGE-IN DIALOGUE SYSTEM**
VERFAHREN ZUM BETRIEB EINES UNTERBRECHNUNGS-DIALOGSYSTEMS
PROCEDE DE FONCTIONNEMENT D'UN SYSTEME DE DIALOGUE D'INTERVENTION

(30) Priority: 29.11.2001 DE 10158583
(43) Date of publication of application: 01.09.2004
(73) Proprietor: Koninklijke Philips Electronics N.V., 5621 BA Eindhoven (NL); Philips Corporate Intellectual Property GmbH, 20099 Hamburg (DE)
(72) Inventor: HELBING, Marc, NL-5656 AA Eindhoven (NL); BENECKEN, Frank, NL-5656 AA Eindhoven (NL)
(74) Representative: Volmer, Georg
(86) International application number: PCT/IB2002/005006
(87) International publication number: WO 2003/046887

(56) References cited:
- WEIQI ZHANG ET AL: "The study on distributed speech recognition system" 2000 IEEE INTERNATIONAL CONFERENCE ON ACOUSTICS, SPEECH, AND SIGNAL PROCESSING. PROCEEDINGS (CAT. NO.00CH37100), 5 - 9 June 2000, pages 1431-1434 vol.3, XP002233412 ISTANBUL, TURKEY, Piscataway, NJ, USA, IEEE, USA ISBN: 0-7803-6293-4
- CAPONE J M ET AL: "Analysis of efficient resource sharing among voice and data users" MILITARY COMMUNICATIONS CONFERENCE, 1995. MILCOM '95, CONFERENCE RECORD, IEEE SAN DIEGO, CA, USA 5-8 NOV. 1995, NEW YORK, NY, USA,IEEE, US, 5 November 1995 (1995-11-05), pages 1155-1159, XP010154122 ISBN: 0-7803-2489-7

## Description

The invention relates to a method of operating a barge-in dialogue system for parallel use by a plurality of users i.e. for use in so-termed "multi-user operation". In addition, the invention relates to a corresponding barge-in dialogue system. Barge-in dialogue systems are meant to be understood as speech dialogue systems which make it possible for a user to interrupt a running system output.

Speech dialogue systems which communicate with a user while using speech recognition and/or speech output devices have been known for a long time. An example of this are automatic telephone answering machines and enquiry systems as they have meanwhile been used more particularly by several larger firms and offices to provide a caller with the desired information in the fastest and most comfortable way possible or connect him/her to a location which is appropriate for the specific desires of the caller. Further examples of this are automatic directory enquiry systems, automatic timetable systems, information services with general information on events for a certain region, for example cinema and theater programs, or also combinations of the various enquiry systems. Such speech-controlled automatic dialogue systems are often referred to as voice portals or language applications.

In order to be of service to various users simultaneously, the dialogue system accordingly has to comprise a plurality of access channels for the users. These may be access channels for connection to a suitable terminal of the user, which comprises an acoustic user interface with a microphone for the user to input speech commands to the dialogue system and a loudspeaker, headphones or the like for issuing acoustic system outputs to the user. For example, the terminal may be a telephone, a mobile radio device or a PC of the user and the access channels may be corresponding telephone and/or Internet connections. A stationary dialogue system, for example a terminal at a public place such as a railway station, airport, museum etc., the access channels may be, for example, headsets or the like with which the users can communicate with the terminal. Furthermore, the speech dialogue system usually comprises for each access channel a dialogue control in the form of a software module. This dialogue control controls the operation of a dialogue with a user via the respective access channel and causes, for example at certain positions in the dialogue operation, a system output to be given to the user via the respective access channel.

The system output - generally also called prompt - may be, for example, a request for input to the user or information requested from the user. To generate such an acoustic prompt, the speech dialogue system needs to have a suitable speech output device, for example a text-to-speech converter which converts text information of the dialogue system into speech for the user and outputs same over the access channel. The speech output device may, however, also have ready-made stored sound files which are played back to the user at an appropriate time. As a rule, the speech dialogue system has for each access channel its own speech output device. However, it is also possible for more access channels to share a common speech output device.

To recognize a speech signal coming in on an access channel i.e. an arbitrary speech utterance of the user such as a word, a word combination or a sentence, and to be able to react to this accordingly, a speech recognition unit - usually a software module - is utilized. The audio data of the speech signal are conveyed to the speech recognition unit for this purpose and the speech recognition unit delivers the result of the recognition, for example, to the dialogue control.

Since speech recognition requires a relatively large computer, dialogue systems that handle a plurality of users are often physically built up from a plurality of computer units. The system then comprises one or more so-called front-end computer units having a plurality of access channels (ports). A front-end computer unit is usually the computer unit of the system that communicates directly with the users via the access channels. The dialogue controls fixedly assigned to the access channels are usually located on the respective front-end computer unit. Also the speech output devices may be located on the front-end computer unit. The speech recognition unit or speech recognition units, on the other hand, are located on a separate computer unit, to be called server in the following, which can render the necessary computing power available for the speech recognition. With larger systems it is customary in practice to utilize a plurality of servers in the system, one or more speech recognition units being implemented in each server.

The dialogue control responsible for the respective access channel can then select a free speech recognition unit at the right time, for example, at the end of a prompt, and assign it to the respective access channel so that an incoming speech signal of the user can immediately be processed and recognized. It is desirable for the selection of one of the available speech recognition units to be effected such that the servers accommodating the speech recognition units are evenly loaded. As a result, optimum use of the capacity of the system and thus a maximum processing speed can be achieved.

Weiqi Zhang et.al. "The study on Distributed Speech Recognition System", 2000 IEEE International Conference on Acoustis, Speech and Signal Processing, Proceedings, 5.6.00-9.6.00, pages 1431-1434, vol. 3 describes a distributed speech recognition system. The system comprises a moderator which decides which engine server is available according to a workload schedule scheme. The system is optimized by server workload control.

Such procedure is naturally only possible if the dialogue system or the dialogue control respectively, knows beforehand when a speech recognition unit is required for the respective access channel. This does not give problems with dialogue systems that allow the user to input only at certain times, that is to say, after a prompt has ended. Such systems, however, are relatively unnatural as regards their behavior towards the user. As is known, users are often inclined to already respond before the dialogue system has finished a request for input This is especially when the user already exactly knows or suspects what input the system requires him to give and which possibilities are available to him at this part of the dialogue. Such interruption of the system output furthermore occurs as many times when information is output which the user wishes to interrupt. Barge-in dialogue systems which make the user's interruption of a running system output possible, on the other hand, are considerably more natural in their behavior. In addition, they are also more comfortable to the user, because the user always has a possibility to intervene and need not wait for the end of a prompt and as a rule also reaches the position in the dialogue routine earlier where the desired information is output.

To guarantee that a speech signal of the user is recognized at any time, which is necessary for a barge-in dialogue system, there are various possibilities:
One possibility consists of the fact that to each access channel is permanently assigned its own speech processing unit. With a large number of access channels this leads to an accordingly large number of speech recognition units. Since the system does not influence on which of these access channels the associated speech recognition units are simultaneously needed, this may lead to an extraordinary load of the servers at a certain time. In order to guarantee that the dialogue system can still work reasonably fast in such situations, the computing power of the individual servers is to be designed sufficiently large, so that all the speech recognition units located on the server can work simultaneously without any problem.

A further possibility of producing a barge-in dialogue system for a plurality of users consists of utilizing speech activity detectors (SADs) in which exactly one such speech activity detector is assigned to each access channel. A detection of the speech activity is practical anyway in barge-in dialogue systems, so that the system can immediately interrupt a running system output if the user gives an input speech signal. Otherwise the user and the dialogue system would "speak" simultaneously, which may lead to irritation on the side of the user and, on the other hand, - due to the echo of the system output in the input signal - could complicate the recognition of the user's speech signal by the speech recognition unit.

These speech activity detectors may be implemented by a simple energy detection of the access channel which requires only relatively little computing power. Subsequently, without any problem in a 1:1 assignment, one SAD can be rendered available for each access channel, which SAD is implemented together with the associated access channel on the respective front-end computer unit. Analogous to the dialogue system that cannot be barged-in mentioned above, such a system architecture allows the assignment of a speech recognition unit to an access channel always when a speech recognition unit is necessary on the respective access channel. Accordingly, it is possible without any problem in such a system to heed as even a server load as possible when the speech recognition units are assigned to the access channels. Especially with larger systems comprising very many channels and very many speech recognition units it is furthermore possible, due to the statistically low probability that a speech recognition unit is required on all access channels at the same time, that the number of available speech recognition units is lower than the number of access channels.

A great disadvantage of such a system, however, is the fact that between the detection of the speech by the SAD and the actual physical assignment of the access channel to a speech recognition unit takes some time in which the user goes on talking. Therefore it is necessary for the user's speech signal i.e. a large number of audio data, to be buffered first and then switched to the speech recognition unit as soon as the latter is ready to operate. Such a buffering of the audio data is, on the one hand, expensive and thus cost-intensive. On the other hand, it reduces the efficiency of the system.

It is an object of the present invention, as claimed in claims 1 and 5, to provide a method for multi-user operation of a barge-in dialogue system or provide a respective barge-in dialogue system, which is always rapidly capable of processing an incoming speech signal of the user in a simple manner while the total computing power required by the system is minimized.

This object is achieved in that in a dialogue system which comprises one or more front-end computer units with a plurality of access channels for the users and a plurality of servers with a respective number of speech processing units comprising each a speech activity detector and a speech recognition unit, at various specific times repeatedly a new speech processing unit on one of the servers is assigned to the access channel of the front-end computer unit utilized by a user during a dialogue with the user, so that the servers are loaded as evenly as possible and the speech activity detector detects a speech signal coming in on the currently assigned access channel and activates the speech recognition unit. Depending on the device, the object is achieved by a barge-in dialogue system with a corresponding number of speech processing units arranged on several servers comprising each a speech recognition unit and a speech activity detector for detecting an incoming speech signal, and activation of the speech recognition unit, and comprising an access co-ordination unit which repeatedly during a dialogue with a user at various specific times assigns a new speech processing unit on one of the servers to the front-end computer unit access channel used by the user, so that the servers are loaded as evenly as possible. The dependent claims respectively contain highly advantageous embodiments and further aspects of the invention.

According to the invention there are speech processing units on the servers which units comprise, on the one hand, a speech activity detector and, on the other hand, a speech recognition unit, that is to say, the speech activity detector which detects an incoming speech signal and activates the speech recognition unit forms in combination with the speech recognition unit a speech processing unit. The speech activity detector and the speech recognition unit may actually be separate units which are combined i.e. grouped to one speech processing unit. However, it is alternatively possible for the speech activity detector and the speech recognition unit to be integrated into a speech processing unit so that they can be considered separate operating modes of the speech processing unit and utilize, for example, common software routines or memory areas etc.

The barge-in dialogue system is operated according to the invention so that repeatedly during a dialogue with a user at various specific times a new speech processing unit on one of the servers is assigned to the respective access channel used by the user of the front-end computer unit. This new assignment is made so that the servers are loaded as evenly as possible. This means that there is a permanent reassignment of the speech processing units to the active access channels while the instants for the reassignment of a speech processing unit to a certain access channel of the system are determined such that there is a slim chance for a speech processing unit to be needed particularly during the reassignment to the respective access channel.

A barge-in dialogue system according to the invention consequently needs to have a suitable access co-ordination unit (Resource Manager) which repeatedly assigns the speech processing units of the various servers to the respective access channels at the desired times so that a uniform load of the servers is guaranteed.

The grouping of the speech activity detectors and the speech recognition units on the servers to said speech processing units is advantageous, on the one hand, in that the front-end computer units are not loaded by speech activity detectors. Audio data streams arriving at a certain speech activity detector can directly be processed by the associated speech recognition unit and need not once again be physically diverted between various computers, which could take up additional time and also a buffering of the audio data, which should be avoided at all cost.

Based on the permanent actual reassignment of the speech processing units to the access channels and the linked equal loads of the servers, it is possible that a larger number of speech processing units is logically arranged on one server while the physical computing power of the servers need not be designed such that all the speech processing units on the server can work simultaneously with full power. It is therefore possible without any problem, despite a lower computing power on the servers to logically arrange as many speech processing units as there are access channels; the processing units comprising each a speech activity detector and a speech recognition unit.

Preferably, even an equal number of speech processing units can be rendered available as access channels to thus reach a higher flexibility in case of a reassignment of a speech processing unit to an access channel. The advantage of such "overcapacity" of speech processing units shows particularly when very many users simultaneously utilize the dialogue system at a certain instant and substantially all access channels are seized so that, as a result, a large part of the speech processing units have already been assigned to an access channel. As a rule, however, only with part of the speech processing units the speech recognition unit is active at this particular instant, which speech recognition unit utilizes more computing power from the respective server. On the other hand, in a large part of the speech processing units only the speech activity detector is active which requires only little computing power. The high number of calls may lead to a situation, however, in which no speech processing unit is available anymore in certain servers, although these servers are only slightly loaded as regards their computing power and an assignment of an access channel to a speech processing unit on one of the respective servers would be optimal per se for an even load of the servers. In the extreme case with a 1:1 assignment of access channels to speech processing units and with a full utilization of all the access channels by as many users, no reassignment would be possible anyway. However, if more speech processing units than there are access channels are logically arranged on the servers, always at least one reassignment will be possible while, with an increasing number of spare speech processing units, it is more likely that at any time on each one of the servers at least still one non-seized speech processing unit is available to carry out at any time an assignment that is optimal with respect to the server load.

The dialogue system is preferably operated or the assignment is made so that to each active access channel, over which a dialogue between the system and the user takes place, in essence permanently one of the speech processing units is assigned. This means that to each of the access channels during the dialogue - i.e. with the exception of brief moments in which a reassignment of the speech processing unit to the respective access channel is made - one of the speech processing units is nearly constantly available while they are usually constantly changing speech processing units. As far as there are certain deliberately provided times in a dialogue routine in which times, for example, an interruption of a system output is undesired, obviously no speech processing unit needs to be assigned to the respective access channel during these times.

In a highly advantageous example of embodiment the system comprises means for signaling to the access co-ordination unit when a recognition of a speech signal of the speech recognition unit previously having entered an access channel was terminated and/or when a new system output to the user can commence over this access channel. This may be effected, for example, by a signal of the speech processing unit itself which announces that the recognition has been terminated. Alternatively, a respective signal may also come from the dialogue control which has received the necessary information from the speech recognition unit and now continues a dialogue in accordance with the received speech signal of the user and causes a system output to be given to the user. The reassignment of the speech processing unit to the respective access channel may then preferably be effected immediately after the recognition of the speech signal or within a predefined brief period of time at the beginning of the next system output to the user. This is a highly suitable time space for reassignment because, typically, a system output is not interrupted by the user during the first couple of milliseconds, and thus at this instant no speech recognizer on the access channel is probably necessary: In this way it is guaranteed that substantially always when a speech recognizer could be used, this recognizer is immediately available. The probability that audio data are sometimes to be buffered may therefore be neglected.

Since according to the invention the speech activity detectors are not used in the front-end computer unit, it is not necessary for speech detection to lead the audio data streams through the processor of the front-end computer unit. As a result, the audio data are preferably conveyed by the access channel to the currently assigned speech processing unit without the data being led through the processor. This is possible in that a purely hardware circuit, for example, a so-termed switch matrix is used for conveying the audio data streams from the access channel to the servers. Since the processor, which would cause a bottleneck for the audio data streams, is completely bypassed in this manner, considerably more channels can be reached in the respective front-end computer unit with such a hardware solution. In this way, with such hardware solution it is possible without any problem for example to provide 500 to 1000 or more access channels in a system in which about 120 access channels could be implemented via a software solution,.

In the selection method with which a speech processing unit is selected for an access channel to obtain an even load of the servers in case of reassignment, the known selection methods of the non-barge-in systems can be reverted to.

For example, the method known as round-Robin can be used in which a change is cyclically made from one server to the next. This method is possible at extremely low cost. However, an even load is reached only on the basis of a statistically assumed uniform, so that in individual cases temporarily also a relatively non-uniform load may arise.

A similar method is a so-called Least-Use method in which always the computer is chosen that was not used last.

A slightly more expensive but reliable method with respect to the even load is the so-called Load Balancing Method in which always the server having the currently smallest load is chosen. This method is the preferred method because also in extreme cases an even load can be reached. For this purpose the system preferably includes means for determining the load values for the individual speech processing units or servers, respectively, and to deliver these load values to the access co-ordination unit which then, based on the load values of the individual units or servers, makes a decision about the reassignment of a speech processing unit to an access channel.

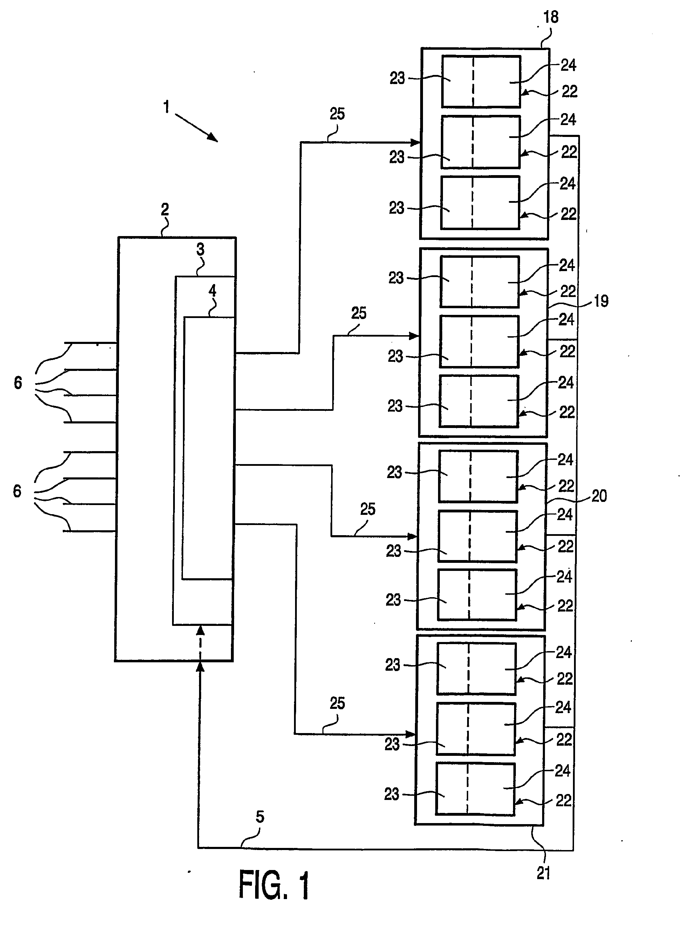

The invention will be further described in the following with reference to the appended Figure with the aid of an example of embodiment. The sole Figure here shows a coarsely diagrammatic block diagram of a barge-in dialogue system 1 according to the invention with only the arrangement of the components essential to the invention being represented.

This barge-in dialogue system 1 comprises, in essence, a front-end computer unit 2 and a plurality of servers 18, 19, 20, 21. The front-end computer unit 2 has access channels 6 for the users. In the present example of embodiment the access channels 6 are telephone access channels, for example, ISDN channels. On the servers 18, 19, 20, 21 are located a respective plurality of speech processing units 22. Each of the speech processing units 22 contains a speech activity detector 23 and a speech recognition unit 24.

The example of embodiment shown has more speech processing units 22 than there are access channels 6 on the front-end computer unit 2. In the present case the dialogue system 1 has only eight access channels 6 for clarity. In contrast, the dialogue system 1 here has four servers 18, 19, 20, 21 on which are logically arranged three respective speech processing units 22. This means that for the eight access channels 6 there are twelve speech processing units 22 available. The dialogue system 1 may, however, also have fewer servers or a considerably larger number of servers, while also the number of speech processing units 22 per server 18, 19, 20, 21 is random and is limited only by the computing power and the storage capacity of the respective servers 18, 19, 20, 21. The servers 18 to 21 may also have different computing powers and different numbers of speech processing units 22.

In reality a front-end computer unit 22 customarily has a considerably higher number of access channels 6, for example, 120, 500 or even 1000 and more access channels. In a real dialogue system with a front-end computer unit with 120 access channels for example, twelve speech processing units may then accordingly be located on ten servers, so that all in all at least again one speech processing unit is available for each access channel.

The front-end computer unit 2 is connected to the servers 18, 19, 20, 21 via suitable audio data lines 25. In the Figure only one audio data channel 25 is shown per server 18, 19, 20, 21. However, it is also possible to have more audio data channels 25 per server 18, 19, 20, 21, for example, one audio data channel 25 per speech processing unit 22 to be able to provide fast transmission of the audio data for each speech processing unit 22 over its own channel 25.

In the front-end computer unit 2 there is a dialogue control for each of the access channels 6, which dialog control controls a dialogue with the user taking place over the respective access channel, as well as a suitable speech output unit for system outputs to the user. These units are not shown for clarity.

Since it is a dialogue system capable of barging in, always one speech processing unit 22 is to be available to the respective access channel 6 during the dialogue with the user, to be able to process i.e. recognize the information from the speech signal immediately upon receipt of a speech signal. For this reason a speech processing unit 22 on one of the servers 18, 19, 20, 21 is assigned to each one of the access channels 6, the moment a dialogue with a user commences over this access channel,. The audio data arriving over the access channel 6 are directly conveyed by the front-end computer unit 2 over the audio data channels 25 to the currently assigned speech processing unit 22 or to the respective servers 18, 19, 20, 21 on which the speech processing unit 22 is located.

The audio data first reach a speech activity detector 23 in the speech processing unit 22, which is active all the time and quasi "listens in" whether a speech signal of the user arrives at the access channel 6 currently assigned to the speech processing unit 22. This "listening-in" of the speech processing unit 22 or speech activity detector 23, respectively, costs only little computing power. Once the speech activity detector 23 has detected a speech signal, the speech recognition unit 24 is activated, so that it can immediately begin with the recognition of the speech signal. It is then not necessary to divert the audio data stream once again from one computer unit to another, particularly the need for buffering audio data is then cancelled. Since a speech recognition unit 24 is not activated until a speech signal is detected by the speech activity detector 23, the necessary computing power of a speech processing unit 22 is relatively low during a large part of the dialogue.

According to the invention one and the same speech processing unit 22 is not permanently assigned to the respective access channel 6 during a dialogue with a user, but, repeatedly in the course of the running dialogue, at specific different times a new speech processing unit 22 available then, i.e. not used by another access channel 6, is assigned to the respective access channel 6.

This assignment takes place always when a recognition of a speech signal input by the user is terminated, or in a very brief time frame after a new prompt to the respective user. At this time it need not be expected that the user interrupts the dialogue system to input a new speech command. Normally there is an interruption by the user only a couple of milliseconds after the beginning of a prompt at the earliest. In this manner it is provided that a reassignment of the individual speech processing units 22 to the then active access channels 6 is made permanently, without this being noticeable to the users, for example, by longer reaction times of the dialogue system.

To avoid that a system output runs on although the user has already replied to the dialogue system and input a speech signal himself, the speech activity detector 23 further sends for example over a local area network link 5 or a similar data channel via which the servers 18 to 21 are connected to the front-end computer unit 2, a respective signal to the dialogue control that serves the access channel 6. This dialogue control then interrupts the current system output.

The assignment of the speech processing units 22 on the various servers 18 to 21 to the respective active access channel 6 is effected by means of an access co-ordination unit (Resource Manager) 3 which is located on the front-end computer unit 2. This access co-ordination unit 3 comprises a so-termed speech matrix 4 which purely as hardware switches the access channels 6 with the audio data channels 25 to the desired speech processing units 22. This hardware implementation of the switch has the advantage that the processor of the front-end computer unit is not loaded by the audio data.

Since also the speech activity detectors 23 are located directly on the servers 18, 19, 20 and 21 in the speech recognition units 22 and not in the front-end computer unit 2, it is therefore not necessary at all for the audio data arriving over an access channel 6 to be led through a processor of the front-end computer unit 2 in the described embodiment of the invention, which computer unit 2 would present a bottleneck for the audio data stream, thereby reducing the efficiency of the whole system.

When a new speech processing unit 22 is assigned to an active access channel 6, the access co-ordination unit 3 provides that the individual servers 18, 19, 20, 21 are loaded as evenly as possible as regards the required computing power and the current storage requirement. For this purpose, standardized values of capacity utilization are transmitted from the individual servers 18, 19, 20, 21, for example via the local area network link 5 to the access co-ordinating unit 3 in the front-end computer unit 2 on the basis of which capacity utilization values the access co-ordination unit 3 can detect the load of the individual servers 18, 19, 20, 21. Based on these load values the reassignment is then made in that the values may be adjusted. This way of proceeding will once again be explained in the following with the aid of a "random indication" during the operation of the barge-in dialogue system 1.

To this end, it is assumed that at a particular instant a user is served over all eight access channels 6 i.e. all the access channels 6 are active. The dialogue runs on the access channels 6 are then completely independent of each other. This means that at a certain instant system outputs are made on several of the access channels 6, whereas the user utters a speech signal on other ones of the access channels 6, i.e. a speech signal arrives. Depending on whether a speech signal has to be processed or not, different computing power is required from the speech processing unit 22 then assigned to the respective active access channel, which puts a different load on the respective servers 18, 19, 20,21.

It is furthermore assumed that the current assignment of the speech processing units 22 to the access channels 6 at a specific instant happens to be so that two of the speech processing units 22 from each of the four servers 18, 19, 20, 21 are assigned to one access channel 6, whereas the third speech processing unit 22 is not seized yet. It is further assumed that at a particular instant in one of the access channels 6 a recognition of a speech signal input by the user has taken place and a prompt is issued to the user. Simultaneously, the access co-ordination unit 3 establishes with the aid of the utilization values that the server 18 on which the speech processing unit 22 currently assigned to this access channel 6 is located, has a relatively high degree of utilization because just on the other access channel 6, which is assigned to the second speech processing unit 22 of the same server 18, the user enters the speech signal which is processed by the speech recognition unit 24 of this speech processing unit 22. On the other hand, another server 19 from the four servers 18, 19, 20, 21 has relatively low utilization because system outputs take place here on the two associated, currently assigned access channels 6 and the user enters no more speech signals then. The two remaining servers 20, 21, on the other hand, have an average level of utilization because here too one of the speech processing units 22 is busy recognizing a speech signal. The access co-ordination unit 3 on the front-end computer 2 will therefore take the opportunity to assign a new speech processing unit 22 to the access channel 6 on which the prompt is just being outputted, so as to unload the server 18 on which the speech processing unit 22 currently assigned to the respective access channel 6 is located. Based on the utilization value the third, free speech processing unit 22 on the server is selected that has the least load at the time.

Since the user's speech inputs are permanently recognized and subsequently prompts issued during a dialogue, there are numerous opportunities during a dialogue to assign a new speech processing unit 22 to the access channel 6 on which the dialogue is held. As a result of the frequent reassignment of the speech processing units 22 to the access channels 6 it is possible to observe a very even loading of all the servers, so that despite a large number of speech processing units logically arranged on the servers, the total computing power of the servers may be reduced. Based on the suitable selection of instants of reassignment it need not be feared that at an instant at which an access channel needs a speech processing unit, this unit is currently unavailable. All in all the invention thus makes an effective distribution of speech activity detectors and speech recognition units possible over a large number of servers within a network, an efficient distribution of these resources being given even in dialogue applications that are capable of barging in. Furthermore, the system complexity in the front-end computer unit may be kept very small, so that an efficient distribution of audio data to the individual speech recognition units even purely by hardware becomes possible. However, it is pointed out that the invention is also meaningful in those cases where the front-end computer units distribute the audio data by means of suitable software, for example, all utilizing their main processor. Since the main processor in such a case is relatively heavily loaded by the distributions anyway, the advantage is highly noticeable that the speech activity detectors are arranged on the servers and do not form an additional load on the main processor.

It is once more expressly stated that the example of embodiment shown is only a possibility of implementing the system. More particularly it is also possible for such a dialogue system to have a plurality of front-end computer units 2 which then in their turn for example contain a plurality of access channels. Similarly, for each access channel may be used its own front-end computer unit. An example of this is a dialogue system in which the respective PC of a user itself forms the front-end computer unit, while for example the dialogue control for the respective application is located on this PC and the access to the servers with the speech processing units is effected via an Internet connection. These front-end computer units could then be connected, for example, to a central computer unit which, in essence, only functions as a switching center and, for example, has the resource manager and a respective switch matrix.

## Claims

1. A method of operating a barge-in dialogue system (1) for parallel use by a plurality of users, which dialogue system comprises
- one or more front-end computer units (2) having a plurality of access channels (6) for the users
- and a plurality of servers (18, 19, 20, 21) with a respective number of speech processing units (22) which comprise each a speech activity detector (23) and a speech recognition unit (24),
where repeatedly during a dialogue with a user, at various specific times a new speech processing unit (22) on one of the servers (18, 19, 20, 21) is assigned to the access channel (6) of the front-end computer unit (2) utilized by the user so that the servers (18, 19, 20, 21) are loaded as evenly as possible and the speech activity detector (23) detects a speech signal coming in on the currently assigned access channel and activates the speech recognition unit (24).

2. A method as claimed in claim 1, **characterized in that** the reassignment of a speech processing unit (22) to an access channel (6) takes place immediately after a recognition of a speech signal entered by the user or within a predefined short period of time at the beginning of a system output to the user.

3. A method as claimed in claim 1 or 2, **characterized in that** to each of the access channels (6) in essence permanently during a dialogue with a user one of the speech processing unit (22) is assigned.

4. A method as claimed in one of the claims 1 to 3, **characterized in that** for the individual servers (18, 19, 20, 21) always a load value is determined and an assignment takes place for which the load values of the individual servers (18, 19, 20, 21) are used.

5. A barge-in dialogue system for parallel use by a plurality of users, comprising
- one or more front-end computer units (2) having a plurality of access channels (6) for the users,
- a plurality of servers (18, 19, 20, 21) which comprise each a number of speech processing units (22) with a respective speech recognition unit (24) and a speech activity detector (23) for detecting an incoming speech signal and activating the speech recognition unit (24),
- and an access co-ordination unit (3) which repeatedly during a dialogue with the user, at various specific times assigns to the user-deployed access channel (6) of the front-end computer unit (2) a new speech processing unit (22) on one of the servers (18, 19, 20, 21) such that the servers (18, 19, 20, 21) are loaded as evenly as possible.

6. A dialogue system as claimed in claim 5, **characterized by** means of signaling to the access co-ordination unit (3) the termination of a recognition of a speech signal previously input in an access channel (6) and/or the beginning of a system output to the user via this access channel (6).

7. A dialogue system as claimed in claim 5 or 6, **characterized by** means for determining utilization values for the individual servers (18, 19, 20, 21) and means for transferring these utilization values to the access co-ordination unit (3).

## Patentansprüche

1. Verfahren zum Betrieb eines Unterbrechungsdialogsystems (1) zur parallelen Nutzung durch eine Vielzahl von Benutzern, wobei das Dialogsystem Folgendes umfasst:
- eine oder mehrere Frontend-Computereinheiten (2) mit einer Vielzahl von Zugriffskanälen (6) für die Benutzer
- und eine Vielzahl von Servern (18, 19, 20, 21) mit einer entsprechenden Anzahl von Sprachverarbeitungseinheiten (22), die jeweils einen Sprachaktivitätsdetektor (23) und eine Spracherkennungseinheit (24) enthalten,
wobei während eines Dialogs mit einem Benutzer zu verschiedenen bestimmten Zeitpunkten wiederholt eine neue Sprachverarbeitungseinheit (22) auf einem der Server (18, 19, 20, 21) dem Zugriffskanal (6) der Frontend-Computereinheit (2) zugewiesen wird, die von dem Benutzer genutzt wird, so dass die Server (18, 19, 20, 21) so gleichmäßig wie möglich belastet werden und der Sprachaktivitätsdetektor (23) ein auf dem gerade zugewiesenen Zugriffskanal eintreffendes Sprachsignal detektiert und die Spracherkennungseinheit (24) aktiviert.

2. Verfahren nach Anspruch 1, **dadurch gekennzeichnet, dass** die Neuzuweisung einer Sprachverarbeitungseinheit (22) zu einem Zugriffskanal (6) unmittelbar nach einer Erkennung eines durch den Benutzer eingegebenen Sprachsignals oder innerhalb einer vordefinierten kurzen Zeitspanne zu Beginn einer Systemausgabe an den Benutzer erfolgt.

3. Verfahren nach Anspruch 1 oder 2, **dadurch gekennzeichnet, dass** jedem der Zugriffskanäle (6) während eines Dialogs mit einem Benutzer im Wesentlichen permanent eine der Sprachverarbeitungseinheiten (22) zugewiesen ist.

4. Verfahren nach einem der Ansprüche 1 bis 3, **dadurch gekennzeichnet, dass** für die einzelnen Server (18, 19, 20, 21) immer ein Belastungswert bestimmt wird und eine Zuweisung erfolgt, für die die Belastungswerte der einzelnen Server (18, 19, 20, 21) herangezogen werden.

5. Unterbrechungsdialogsystem zur parallelen Nutzung durch eine Vielzahl von Benutzern, das Folgendes umfasst:
- eine oder mehrere Frontend-Computereinheiten (2) mit einer Vielzahl von Zugriffskanälen (6) für die Benutzer,
- eine Vielzahl von Servern (18, 19, 20, 21), welche jeweils eine Anzahl von Sprachverarbeitungseinheiten (22) mit einer betreffenden Spracherkennungseinheit (24) und einem Sprachaktivitätsdetektor (23) zum Detektieren eines eintreffenden Sprachsignals und Aktivieren der Spracherkennungseinheit (24) umfassen,
- und eine Zugriffskoordinierungseinheit (3), die dem vom Benutzer genutzten Zugriffskanal (6) der Frontend-Computereinheit (2) wiederholt während eines Dialogs mit dem Benutzer zu verschiedenen bestimmten Zeitpunkten eine neue Sprachverarbeitungseinheit (22) auf einem der Server (18, 19, 20, 21) zuweist, so dass die Server (18, 19, 20, 21) möglichst gleichmäßig belastet werden.

6. Dialogsystem nach Anspruch 5, **gekennzeichnet durch** Mittel, die der . Zugriffskoordinierungseinheit (3) die Beendigung einer Erkennung eines zuvor in einen Zugriffskanal (6) eingegebenen Sprachsignals und/oder den Beginn einer Systemausgabe an den Benutzer über diesen Zugriffskanal (6) signalisieren.

7. Dialogsystem nach Anspruch 5 oder 6, **gekennzeichnet durch** Mittel zum Bestimmen von Auslastungswerten für die einzelnen Server (18, 19, 20, 21) und Mittel zum Übertragen dieser Auslastungswerte an die Zugriffskoordinierungseinheit (3).

## Revendications

1. Procédé de fonctionnement d'un système de dialogue d'intervention (1) pour utilisation parallèle par plusieurs utilisateurs, lequel système de dialogue comprend
- une ou plusieurs unités d'ordinateur frontales (2) ayant une pluralité de canaux d'accès (6) pour les utilisateurs
- et une pluralité de serveurs (18, 19, 20, 21) avec un nombre respectif d'unités de traitement vocal (22) qui comprennent chacune un détecteur d'activité vocale (23) et une unité de reconnaissance vocale (24),
dans lequel d'une façon répétée pendant un dialogue avec l'utilisateur, à des temps spécifiques variés, une nouvelle unité de traitement vocal (22) sur un de serveurs (18, 19, 20, 21) est assignée au canal d'accès (6) de l'unité d'ordinateur frontale (2) utilisé par l'utilisateur de sorte que les serveurs (18, 19, 20, 21) sont chargés d'une façon aussi équilibrée que possible et que le détecteur d'activité vocale (23) détecte un signal vocal entrant dans le canal d'accès actuellement assigné et active l'unité de reconnaissance vocale (24).

2. Procédé selon la revendication 1, **caractérisé en ce que** la réassignation d'une unité de traitement vocal (22) à un canal d'accès (6) prend place immédiatement après une reconnaissance d'un signal vocal entré par l'utilisateur ou endéans une courte période de temps prédéfinie au début d'une sortie de système à l'utilisateur.

3. Procédé selon la revendication 1 ou 2, **caractérisé en ce qu'**une des unités de traitement vocal (22) est assignée à chacun des canaux d'accès (6) essentiellement d'une façon permanente pendant un dialogue avec un utilisateur,

4. Procédé selon l'une quelconque des revendications 1 à 3, **caractérisé en ce que**, pour les serveurs individuels (18, 19, 20, 21), une valeur de charge est toujours déterminée et une assignation prend place pour laquelle les valeurs de charge des serveurs individuels (18, 19, 20, 21) sont utilisées.

5. Système de dialogue d'intervention pour utilisation parallèle par plusieurs utilisateurs, comprenant :
- une ou plusieurs unités d'ordinateur frontales (2) ayant une pluralité de canaux d'accès (6) pour les utilisateurs,
- une pluralité de serveurs (18, 19, 20, 21) qui comprennent chacun un nombre d'unités de traitement vocal (22) avec une unité de reconnaissance vocale respective (24) et un détecteur d'activité vocale (23) pour détecter un signal vocal entrant et pour activer l'unité de reconnaissance vocale (24).,
- et une unité de coordination d'accès (3) qui, d'une façon répétée pendant un dialogue avec l'utilisateur, à divers temps spécifiques, assigne au canal d'accès déployé de l'utilisateur (6) de l'unité d'ordinateur frontale (2), une nouvelle unité de traitement vocal (22) sur un des serveurs (18, 19, 20, 21) de sorte que les serveurs (18, 19, 20, 21) sont chargés d'une façon aussi équilibrée que possible.

6. Système de dialogue selon la revendication 5, **caractérisé par** des moyens de signalisation à l'unité de coordination d'accès (3) de la fin d'une reconnaissance d'un signal vocal entré précédemment dans un canal d'accès (6) et/ou du début d'une sortie de système à l'utilisateur via ce canal d'accès (6).

7. Système de dialogue selon la revendication 5 ou 6, **caractérisé par** des moyens pour déterminer des valeurs d'utilisation pour les serveurs individuels (18, 19, 20, 21) et des moyens pour transférer ces valeurs d'utilisation à l'unité de coordination d'accès (3).
